Europäisches Patentamt

European Patent Office

Office européen des brevets

(19)

(11) **EP 1 323 065 B1**

(12) **EUROPEAN PATENT SPECIFICATION**

(45) Date of publication and mention
of the grant of the patent:
**03.05.2006 Bulletin 2006/18**

(21) Application number: **01976192.3**

(22) Date of filing: **05.09.2001**

(51) Int Cl.:
***G06F 17/00*** *(2006.01)*

(86) International application number:
**PCT/EP2001/010225**

(87) International publication number:
**WO 2002/021305 (14.03.2002 Gazette 2002/11)**

(54) **A SYSTEM AND A METHOD TO ACCESS AND ORGANISE INFORMATION AVAILABLE FROM A NETWORK**

SYSTEM UND METHODE ZUM ZUGRIFF UND ZUR ORGANISATION VON IN EINEM NETZWERK VERFÜGBAREN INFORMATION

SYSTEME ET PROCEDE D'ACCES ET D'ORGANISATION D'INFORMATION DISPONIBLE SUR UN RESEAU

(84) Designated Contracting States:
**AT BE CH CY DE DK ES FI FR GB GR IE IT LI LU MC NL PT SE TR**
Designated Extension States:
**RO**

(30) Priority: **05.09.2000 IT MI001952**

(43) Date of publication of application:
**02.07.2003 Bulletin 2003/27**

(73) Proprietor: **Di Nicola Carena, Edgardo**
**20131 Milano (IT)**

(72) Inventors:
• **DI NICOLA CARENA, Edgardo**
**I-20131 Milano (IT)**

• **BAIARDELLI, Giorgio, Pio, Agostino**
**I-24069 Trescore Balneario (IT)**
• **BAIARDELLI, Pio**
**I-20123 Milan (IT)**
• **STRADA, Massimo**
**I-20055 Renate (IT)**

(74) Representative: **Gervasi, Gemma**
**NOTARBARTOLO & GERVASI Srl,**
**Corso di Porta Vittoria, 9**
**20122 Milano (IT)**

(56) References cited:
**WO-A-00/50972          WO-A-99/39281**
**WO-A-99/49396          DE-C- 19 857 336**
**US-A- 5 848 396**

EP 1 323 065 B1

**Description**

The present invention relates to search of information and access to services through a network, for example the Internet, and more particularly pertains to a method for organising the activity of a user by monitoring the activity of the same user, as well as other users who display similar behaviour.

**Prior art.**

From WO-99139281-A it is known to identify groups of users having a similar behaviour when they are browsing a network on the basis of either predefined types of moods or contacts between people, generally to the purpose of building a user profile which can be shared with other users.
From DE-19857336 it is also known a method to identify specific predefined categories of user behaviours when they are browsing a network to the purpose of building a user profile which can be shared with other users.

**Summary of the invention.**

Instead, it is a primary purpose of the present invention to reorganise and classify hyperobjects available on the Internet and to classify a single user in a way to enhance first the most relevant information for bis user profile. It is another purpose of the present invention to monitor the activity of users in a way to classify them depending on their past actions and anticipate their choices during their future activity on Internet.
To accomplish these purposes, the present invention comprises a method of organizing Internet documents and services, in which the same search activity and the access to services by the users is monitored and such activity is used to classify users and organize hyperobjects displayed in the results of their searches. The invention operates by publicly offering an interface on the Internet, which allows the users to select and reorganize information extracted from Internet. Using statistical information processing techniques, like a neural network based system, it allows the activity of a large number of Internet users to build users' profiles and to organize the information available over the Internet through an evolutionary process.
The choice of using neural network based systems and the brief description sets forth rather broadly the more important features of the present invention so as the detailed description thereof may be better understood, and so as the present contributions to the art may be better appreciated. There are, of course, additional features of the invention that will be described hereinafter and which will be for the subject matter of the claims appended hereto.
In this respect, before explaining a preferred embodiment of the invention in detail, it is understood that the invention is not limited in its application to the details of the method set forth in the following description. The invention is capable of other embodiments and of being practiced and carried out in various ways. Also, it is to be understood, that the phraseology and terminology employed herein are for the purpose of description and should not be regarded as limiting.
Those skilled in the art will appreciate that the conception, upon which the disclosure is based, may readily be utilized as a basis for designing other methods and systems for carrying out the objects and purposes of the present invention, some of them we are also currently expioiting. For example, one could use the same principles and very similar implementation described here within the context of a company, in order to monitor the internal activity through an Intranet resource (the localized version of the Internet), organize documenration, stimulate and automate the knowledge transfer process.

List of drawings

The advantages obtained by the invention will be better understood in view of the following drawings, given as a non limiting example, in which:

Figure 1 shows a representation of an Hyperobject according to the invention;
Figure 2 shows a representation of an Hyperspace according to the invention;
Figure 3 shows a representation of an Hyperspace and of the distance Distribution according to the invention;
Figure 4 shows a representation of the movement of an object in an Hyperspace according to the invention;
Figure 5 shows a representation of the movement of a "light" object in an Hyperspace according to the invention;
Figure 6 shows a representation of the movement of a 'Heavy' object in an Hyperspace according to the invention;
Figure 7 shows a representation of Object Distances in an Hyperspace according to the invention;
Figure 8 shows, a representation of a Profiling Process according to the invention;
Figure 9 schematically shows a possible architecture of an apparatus according to the invention.

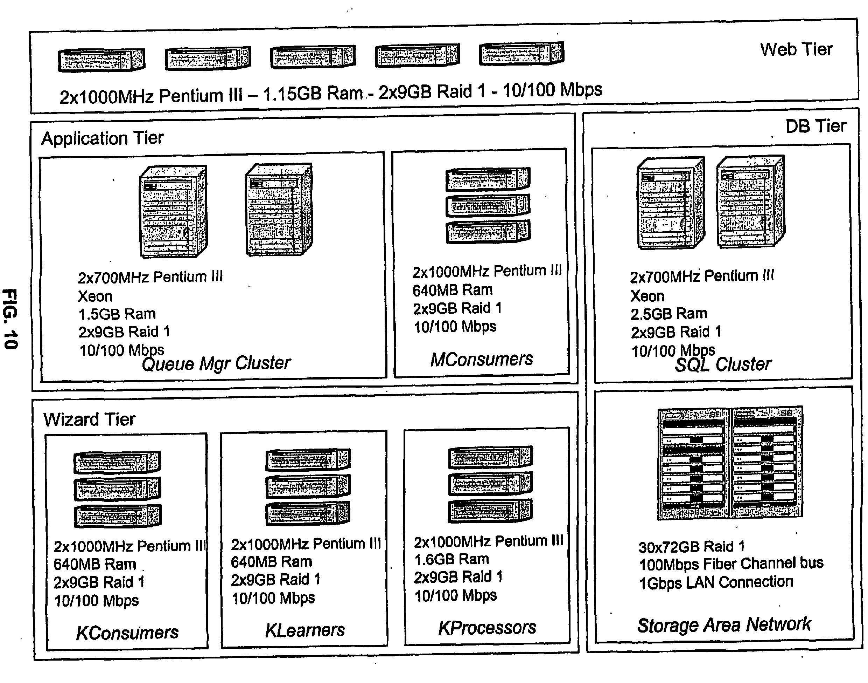

Figure 10 shows a possible hardware configtaation of a system according to the invention

**Detailed description of the invention**

The Internet is an extensive network of computer systems, which allows a user to connect with various computer servers or systems. The Internet permits users to send and receive data between the computers connected to this network. The data can be read, viewed or listened to on a browser or other software program from over the Internet on a remote user computer. This data may comprise articles, databases, data collections, web sites, web pages, graphics, encryption, audio, video or any other type of information collectively referred to as hyperobjects.

We mean for "hyperobject" any information item (image, text, sound, link to other documents or services, etc.) included in any document or hypertext shared on a global network (e.g., Internet). In other words, hyperobject is any object univocally retrievable from the Internet through a given set of reference information. A hyperobject may be also the result of search of information from a database accessible through Internet. Hyperobjects may be present for limited time and then disappear. This kind of hyperobjects will be still recognised as valid but outdated items. The Internet is then considered for the purpose of this invention as a source of unorganised set of hyperobjects, rather than collection of structured and organised documents. Every document present on the Internet is instead seen as just one possible manner of organising the hyperobjects included in it. The significance of a hyperobject, the interrelation between hyperobjects and relation between hyperobject and keywords are validated by statistical accumulation of information derived by either documents or indication from their usage. The purpose of the following sections is then to define criterions for allowing a "knowledge engine" to structure the widely unorganised collection of hyperobjects extractable from the Internet.

The present invention firstly defines a series of actions, which allow users to search, select, organise either information or links to information and services or both directly on their local machines. Typical actions will be the search of Web pages available from the server database as well as from different search engines present on the Internet, deletion of uninteresting hyperlinks, association of pictures or part of text to new specific keywords; etc.

Users are expected to navigate the information and access the services available from the Internet using a standard Internet browser. An Internet browser is a computer program, which allows users to display standard HTML, documents in form of text, images and hyperlinks, which are transmitted by a computer server connected to a network. Standard Internet browsers like Netscape™ 3.0+ and Internet Explorer™ 3.0+ incorporate also Javascript™ interpreters, which allow executing software attached to HTML documents. This software is platform independent metacode and it is executed by the browser on the client side, allowing to perform a series of complicated actions directly on the user screen, like object deletion and drag & drop, provided that proper program codes have been transmitted by the server in an appropriate way.

One or more servers are connected to the Internet by whom exploits the present invention. They are remotely accessible through the Internet using standard architectures and they provide a proprietary software, to be executed on a typical client machine. This proprietary software could be written in Javascript™ and executed within the standard Internet browser or it could be written instead in the native code language of the client machine. Ultimately, a proprietary Internet browser with the software necessary to this invention could be provided to the user to be used instead of a standard Internet browser.

In a preferred embodiment of the invention, when a user is connected through the network to a server, a client software is transmitted to the user by the server.

This client software is capable of performing editing operation on the "pages", which are accessed by the browser of the user, and possibly of extracting relevant information therefrom in order to continuously send such information to the "knowledge engine" resident in the server, together with other information relating to the user activities.

In this way, the system is able to monitor the activity of each user and to store all related information into its database. Since users can retrieve the effects of their activity on a subsequent access, they are induced to use this system rather than just navigating throughout the information, as in the previous art. At the same time the product of their activity represents additional valuable information stored in the server database, which can be used to answer questions of other users accessing subsequently. Another significant benefit is that users are classified on the basis of their activity, so that a series of actions can be performed toward a restricted selected class of users rather than the whole base.

One drawback of implementing this method is that, as the system depends heavily on a complete transfer of the human expert's knowledge and experience into the particular implementation, it is difficult to produce an expert system capable of understanding the connection between user actions and user needs in a complex and variegate situation like that produced by million of people operating on Internet. Recently, neural network based systems have been developed which provide powerful self-learning and adaptation capabilities to cope with uncertainties and changes in a complex system. The results derived by using neural networks can be obtained without a detailed knowledge of the underlying process, in contrast with those obtained in expert systems.

Neural networks are applied in a different way from a typical pattern recognition and classification (such as voice or shape recognition). Instead of applying this method to patterns that already exist, patterns are generated in the form of coordinates of random points lying on hyperspheres. Points related to a given object or keyword are multiply defined in different hyperspaces. Every hyperspace represents a different context of characterization for a specific object. For example, one defined space is more related to the meaning and to the relevant context of keywords and hyperobjects, thus connecting keywords to hyperobjects, keywords to keywords and hyperobjects to hyperobjects.

Another space connects keywords to users and hyperobjects to users instead, and it is related to areas of usage, in other words to the profile of users. Every space is in general a multidimensional hyper-space with variable number of dimensions. This number is set by the system manager depending on the degrees of freedom that are most convenient to describe the complexity of the corresponding context. In fact, too few dimensions may be insufficient to properly separate different subspaces and to mimic the different meanings/usages of the same subspaces. Conversely fewer dimensions can sometimes be better to create less dispersion in hyper-points and to increase the chance of superimposition, which create an inference process between conceptual areas.

To successfully apply neural network to a situation of consistent data inhomogeneity, each element involved in the learning process is identified by a single sequential number. This number must be unique for each element, i.e., there must be no hyperobjects with the same identification number of another hyperobject, no users with the same identification number of a user, etc.. The actual nature of keywords, hyperobjects and users (e.g., their digital information) is in general discarded and their identification number only will be used. This scheme allows to enrich the knowledge base of information deducted by the actions of users only. This means that the connection between hyperobjects and keywords is given by the indication of users rather that for the fact that the digital information related to a hyperobject is containing that keyword.

Every time a user performs any kind of operation individually involving an unknown hyperobject (highlight, deletion, move, maximize, etc.), it recognizes this hyperobject as significant item and thus a new field will be created for it within the hyperobject database.

The structure of this field is as follows:

| Hyperobject ID: | (a number) |
|---|---|
| Retrieve path: | (any series of keywords which make one able to retrieve the hyperdocument containing the hyperobject) |
| Position within the hyperdocument; | (any locator entity) |
| Date & Time: | (possibly expressed for the Greenwich time zone) |
| Type of information ID: | (a number) |

When a new hyperobject is created, a vector is generated containing the n coordinates of its initial position in the $n$-dimensional space. If no *a priori* information is available, the initial point is randomly generated on the surface of a hypersphere, with the following mechanism described by the following piece of pseudo-code:

```
LET sum2 = 0
LOOP FOR i FROM 1 TO nr
REPEAT LETTING x(i) = RAND*2 -1 WHILE RAND> √(1- x(i)^2)^(i-1)
LET x(i) = x(i)*√(1-sum2)
LET sum2 = sum2 + x(i)^2
END LOOP
LET x(1..nr) = π/4x(1..nr)/√(sum2)
```

This will allow to get a distribution of points within the hyper-space where the mean cross-distance is more or less unitary.

Similar procedures are involved for the construction of all other elements to be connected within the various spaces.

Every time a user signs up for the first time a new field will be created for it within the user database. The structure of a field in the user database is as follows:

| User ID: | (a number) |
|---|---|
| Username: | (chosen by the user during his registration) |
| Password: | (chosen by the user during his registration) |
| Date & Time of first registration: | (possibly expressed for the Greenwich time zone) |
| Date & Time of last access: | (possibly expressed for the Greenwich time zone) |

The random point for a new user can be computed in the same way as in the case of the creation of new hyper-objects. However, when *a priori* information is available, the initial position is determined by a different mechanism. "Boosting" is a way to determine this point by comparing the *a priori* information on a new user (like personal or survey data obtained asking directly the users) with the average position of points related to all previous users falling within the same *a priori* categories.

Every time a user performs an operation involving an unknown set of keywords (search request, association of hyperobjects to keywords, etc..), a new field will be created for it within the keyword database. The set of keyword is stored exactly as typed by the user, but additional spaces are deleted. E.g., "LaTeX" and "latex" are both created, as well as "Ferrari* turbo" and "TURBO* FERRARI", while "news- from* Japan" and "-news* * from* Japan" must correspond to the same field. A node created in the keyword tree is seen as sequence of the keywords related to it, from the highest to the lowest level. The structure of a field in the keyword database is as follows:

| | |
|---|---|
| *Keywords ID:* | (a number) |
| *Keywords list:* | (case and order sensitive with elimination of additional spaces) |

The random point for a new keyword that is not similar to anyone previously inserted is computed in the same way as in the case of the creation of new hyper-objects and new users. When a new set of keywords is created, a list of correlated existing keywords is sent to the knowledge engine together with a correlation factor. This can be calculated as follow: the only changes from upper-case to lower-case or exchange in the order of keywords give a maximum correlation equal to 1; a set of keyword included within a number n of other existing keyword, the correlation factor will be 1/n. Other corrections to these correlation factors are given following rules that take into account the similarity in spelling, sound, meaning and equivalence over different languages. This is another kind of "boosting" information used in a similar way to the boosting information for users: the correlation factors represent weights to be used during the computation of an average starting position for the new keywords.

The following table shortly reports the various information elements and their presence in the currently defined spaces:

| | A | B | C | D |
|---|---|---|---|---|
| *Keywords ID* | x | x | x | |
| *Keywords related ID* | x | | | |
| *Keywords past ID* | x | | | |
| *Hyperobject ID* | x | x | x | x |
| *User ID* | | x | | |
| *Action ID* | | x | | x |
| *First 2 bytes of user IP* | | | x | |
| *Time from last connection* | | | | x |
| *Duration of last connection* | | | | x |
| *Architecture ID* | | | | x |

The context of the 4 different defined spaces is as follows:

Meaning correlation
User correlation
Space correlation
Usage correlation

Once points are created in the various hyper-spaces, user actions and other kind of new information are monitored in order to move the various element points to form families of points and to change the distance between one point and each other.

When a user starts a new session, an empty list of actions is temporarily created for that The general information connected to every single session is:

| | |
|---|---|
| *Session ID:* | (a number) |
| *User ID:* | (a number) |
| *First 2 bytes af user IP:* | (a number between 0 and 65535) |
| *Architecture ID:* | (a number) |
| *Time from last connection:* | (number of seconds) |
| *Duration of last connection:* | (number of seconds) |

Any action that can be performed by users on the client application (e.g., highlight, deletion, move and maximize of hyperobjects, activation, deactivation and access of any kind of service, activation or deactivation of options, etc.) will correspond to an action ID (number).

When a user starts a new session, an empty list of actions is temporarily created for that. Every time a user will perform an identified action, the corresponding action, keyword and byperobject ID's will be stored in the next free position of his active list. The filed

| | |
|---|---|
| *Session ID:* | (a number) |
| *Action ID:* | (a number) |
| *Keywords ID:* | (a number-optional) |
| *Hyperobject ID:* | (a number-optional) |
| *Keywords related ID:* | (a number- optional) |

Every action is connecting the different elements with a significance factor ("rank"). This factor gives the amount of change due to the related information and can be positive or negative, depending on whether the association between the involved elements has to become stronger or weaker. For example if a user saves a given hyper-object under a given keywords tree node, it means that the considers the association between keyword and hyper-object strong. Consequently, the rank relative to that action will be positive and will have a relatively high value. When the same user deletes the same hyper-object , it means that his interest towards the hyper-object and its association with the keyword is considered lower. This will be expressed by means of a negative rank, approximately with the same absolute value as for the previous action. Rank values connected to the different actions depend on the specific implementation and are refined by experimentation.

When an association is established, the various points involved will change their position following a rule derived from the Kohonen rule used for neural networks. A major difference from the classic Kohonen rule is that every $n$-th point has not only a position vector $x_n$, but also a weight $w_n$ that determines the "inertia" of that point. The change in position is determined by both these values and by the rank $r$, using the following rules:

$$x_n = (x_m r + x_n w_n)/(r + w_n);$$

$$w_n = w_n + r;$$

$$x_m = (x_n r + x_m w_m)/(r + w_m);$$

$$w_m = w_m + r;$$

When both assignments are executed, the update of vectors and weights will be bi-directional. In this case, the two points are attracted to each other and they will tend to meet each other in some intermediate point Not always an update will be bi-directional. Sometimes only the first or the second assignment will be used. In that case, one of the two points ("child") will be systematically attracted by the other one ("parent").

After a wide usage of these update rules and using thousands or even millions of association information points slowly spatially organize following criterions of belonging to specific conceptual areas. These conceptual areas have not been created *a priori* by an expert intervention, like with an expert system, but automatically organized by the process itself. Most points will tend to go around the centre of the hyper sphere, but they will still have a preferential displacement toward a given direction. To compensate from the trend of collapsitng around the centre, a mean distance between points is computed and a compensation factor is computed to be multiplied to the coordinate values in a way that the mean distance between points will always be approximately equal to 1.

The system can finally be interrogated to predict what the choice, selection or action of a user could be when he accesses the system. For example, the system may be interrogated on the preference of a user toward a given hyper-object, a given keyword or the connection between a keyword and a hyper-object. The criterion is always roughly the same: a distance much less than 1 between two given points means a non-neutral relationship between the two objects associated to those points. By scanning all hyper-objects and all keywords related to given keywords-users-architectures-locations and so on, the system will be able to suggest related keywords, as well as hyper-objects of special interest for the user,. While the final result process can be apparently similar to that of other search engines, the newly invented system takes advantage of its particular usage of all statistical data related to frequency of access to given keywords and hyper-objects, origin of request and profile of users who makes the query, and other important information.. The system will be then much more satisfactory for the user that any existing search engine, and will anticipate their real intentions and exigencies when they look for any specific information or access to services on Internet.

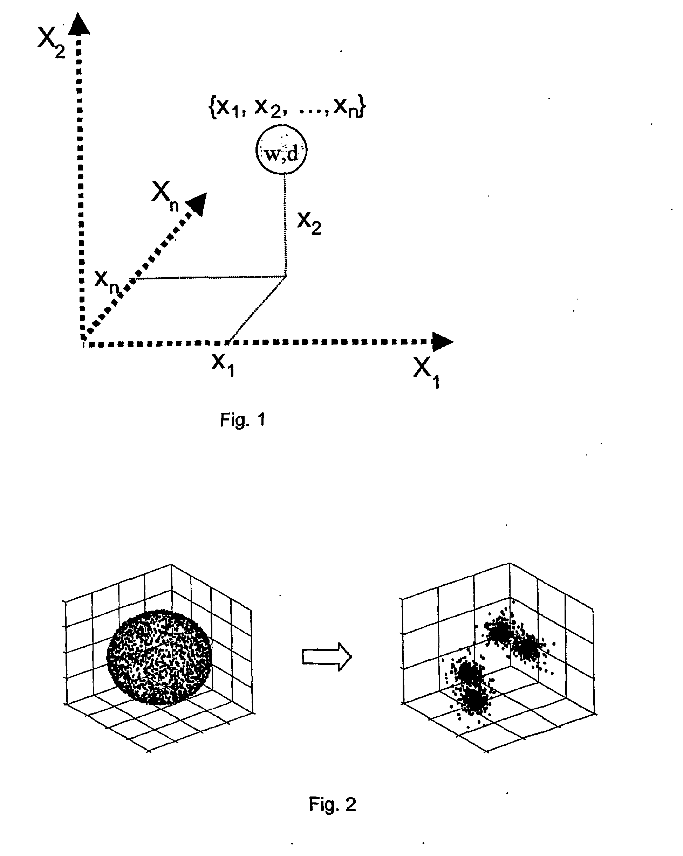

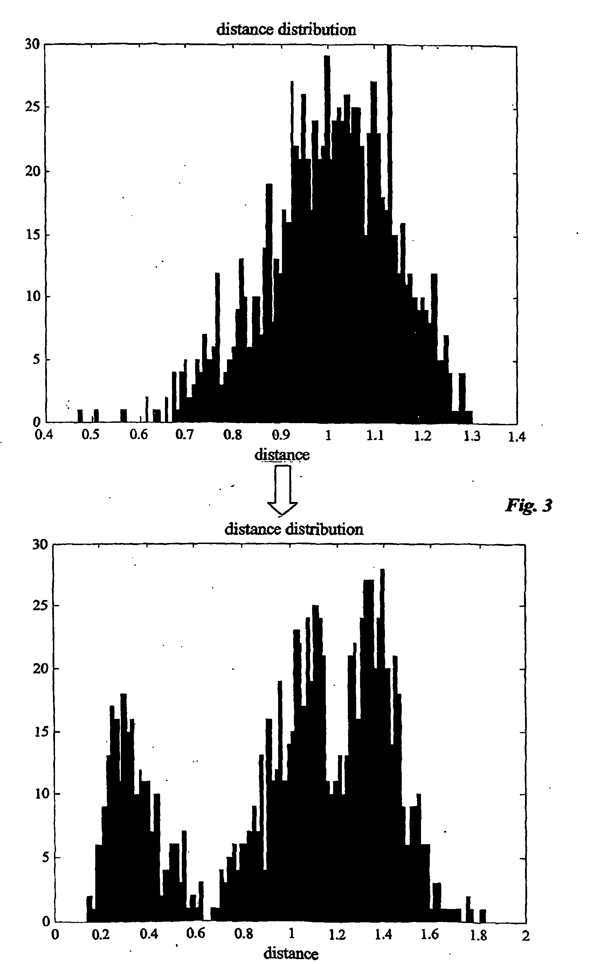

With reference to Fig. 1-9, the following is an explanatory example of the functioning of the apparatus and of the method of the invention, wherein the terms have the following meanings:

*The Knowledge Engine*

The Knowledge Engine is responsible for creating, modifying and.retrieving the Profile
Hyperspace, that is used to return profiled search results.

*KLearners*

Knowledge Learners are responsible for building the Profile Hyperspace. They pull out entries from the Event Queue, compute the new coordinates of the involved objects and update the Profile Hyperspace. All KLearners can work in parallel, even if in case two of them process the same pair of objects, the former information is lost, but this is acceptable from a statistical point of view.

*KProcessors*

KProcessors are responsible for building the result cache used by the Kconsumers to quickly respond to user search requests. They work off-line by reading the log of the events on objects and keywords of the previous time frame and by processing all the distances between the two sets.

*KConsumers*

KConsumers are responsible for returning quick answers to users search requests. For doing this, they interact with a cache of predefined search results that is provided by the KProcessors. For performance reasons, some of this cache may be held in memory.

*MConsumers*

The MetaSearch Consumers are responsible for processing meta-searching and url requests.

*The Personal Knowledge Manager*

The Personal Knowledge Manager is the actual front-end for the end user. It resides on the client side and is tightly integrated in the Microsoft Explorer ® architecture.

*The Web Application Server*

The Web Tier is responsible of handling Web connections with the client.

*Queue Manager*

The Queue Manager is responsible for handling all user requests in its internal queuing system.

*The Database Server*

The SQL server is responsible for storing and retrieving all the objects saved onto the system and the personal tree configuration.

*Storage Area Network*

A storage area network (SAN) is a high-speed special-purpose network (or sub network) that interconnects different kinds of data storage devices with associated data servers on behalf of a larger network of users. A SAN supports disk mirroring, backup and restore, archival and retrieval of archived data, data migration from one storage device to another, and the sharing of data among different servers in a network.

**Example**

**Hyper-Objects (Fig.1)**

Each hyper-object is represented in each Conceptual Space by a set of 16 coordinates, an Inertial Mass Factor and a Decay Factor.
The 16 coordinates are used to determine the object position inside the Profile Hyperspace and represent its degrees of freedom. They can be considered as abstract properties of the object, that are used to correlate objects to each other. The number of actual coordinates used by the system can also be increased to get a finer representation of the objects in the hyperspace.
The Inertial Mass Factor is used to determine the resistance to movement of the object. The more an object is used and referred, the more it becomes heavy, thus reducing its ability to move freely in the Hyperspace.
The Decay Factor is used to determine the obsolescence of an object. It grows in parallel with the Inertial Mass Factor, but it is automatically and periodically decreased by an automatic procedure. This value is also used to filter obsolete objects out of the system.
When first created, the hyper-object is given by the system a 'neutral' set of coordinates, that is a set that places the object at an average distance from all other objects already existing in the hyperspace, and an initial weight and decay factors as defined by the Knowledge Engine configuration. Later interaction of the users moves the object in the hyperspace and increases its inertial mass, until it reaches a stable position that represents its conceptual meaning area..

Learning Process (Fig.s 2 to 7)

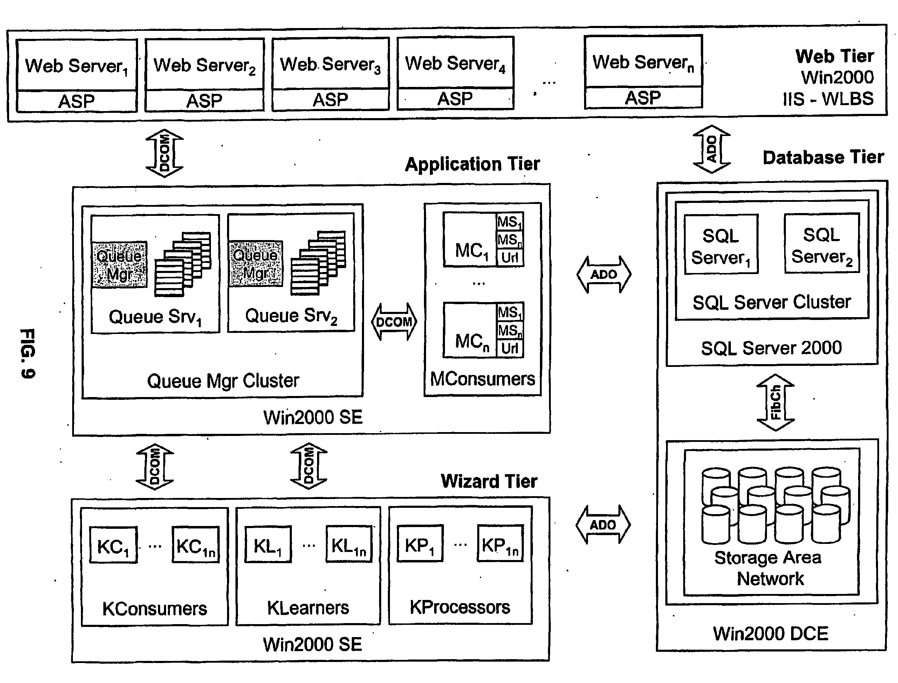

The learning process takes place by analyzing user activity on the Personal Composer. All user actions, such as search request, web navigation, tree and object management, is decomposed into actions and then sent to the server by the Personal Composer add-on. The Web layer inserts all these events into a dedicated queue, from where they are retrieved for processing by the Knowledge Learner (KLeamers in Fig.9).

The process of learning consists in moving hyper-objects within the conceptual hyperspaces towards their stable position, which is given by the sum of all their interactions and correlations with the remaining objects. Once the objects move in the hyperspace, they tend to aggregate into specific areas, that can be considered as *conceptual sytems,* which are areas of highly correlated objects.

These systems are then used by the Knowledge Engine to retrieve appropriate results to user queries, by returning the objects in the hyperspace closest to the keywords provided-As seen in the previous figure, points that has a correlation tend to aggregate (relative distance much lower than 1), while points with few or none correlation tend to diverge (relative distance much grater than 1).

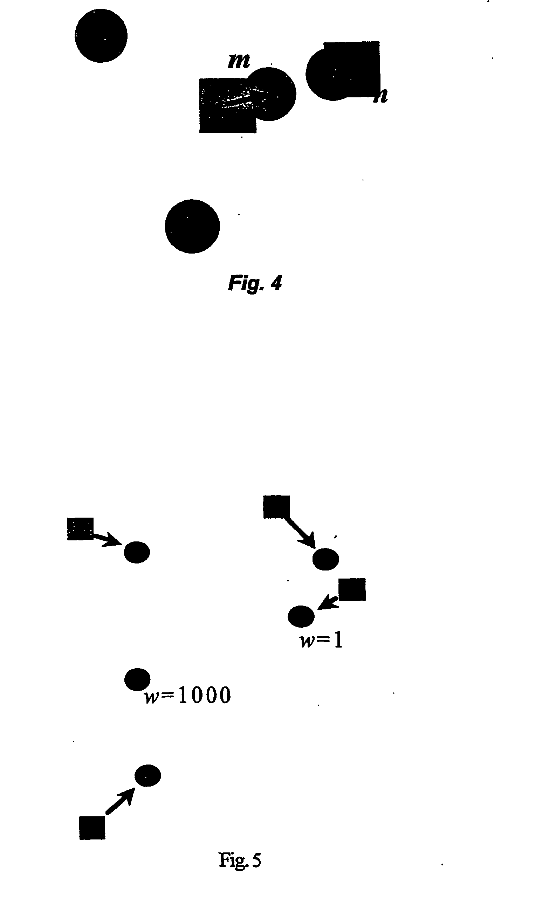

The movement of a hyper-object in its conceptual space is related to its current position and its inertial weight: (Fig.4)

The actual movement is given by the following formula:

$$x_m = (x_n \cdot r + x_m \cdot w_m)/(r + w_m)$$

$$x_n = (x_m \cdot r + x_n \cdot w_n)/(r + w_n)$$

Where:

$$w_m = w_m + r$$

$$w_n = w_n + r$$

(Fig.5)

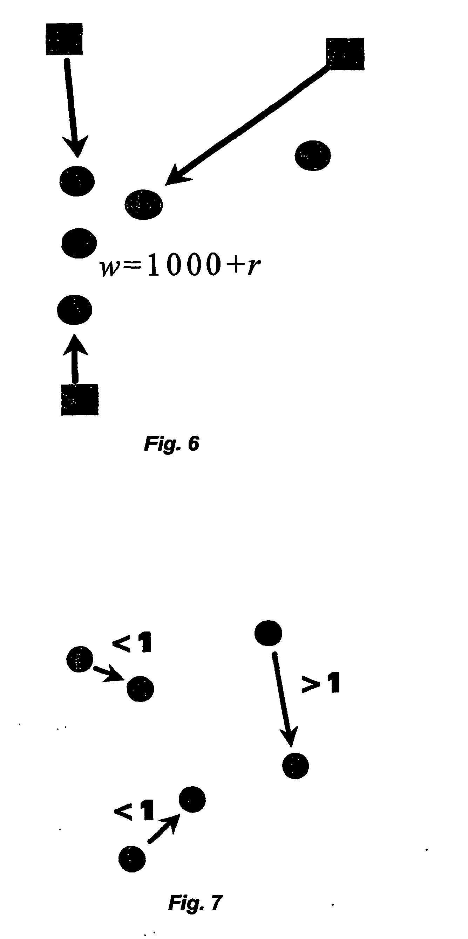

"Light" objects, that is those objects that have not been used frequently, tend to move faster and to be more unstable in the hyperspace. (Fig.6)

"Heavy" objects, that is those objects that have been used frequently, tend to move slower and to be more stable in the hyperspace. These objects also tend to attract lighter objects, thus creating and defining conceptual areas. (Fig.7)

Distances between points within the hyperspace is taken as correlation factor between the corresponding elements (>1 low correlation; <1 high correlation)

Since the system tends to collapse in the long term, a normalization procedure needs to be implemented to keep the median distance between points around 1.

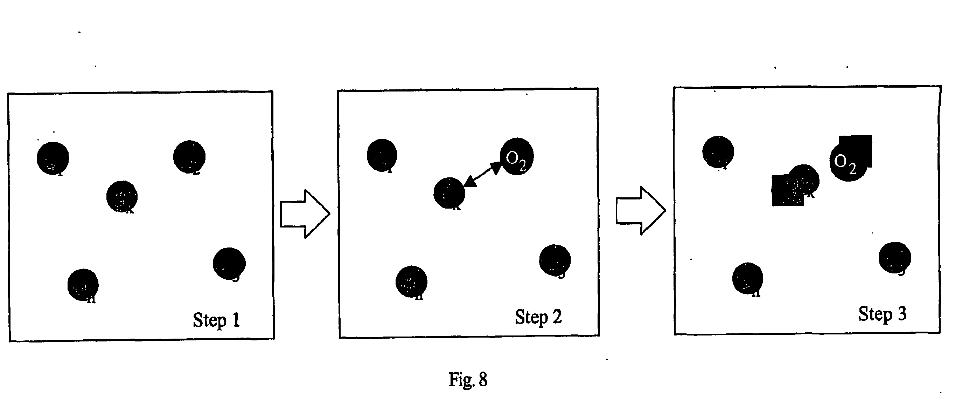

Profiling Process (Fig.8)

User profiling is the process of relating users with keywords and objects in the Profile Hyperspace. Each user activity is used to modify the correlation between the user itself and the rest of the profile universe.

For example, during a search request, the user first submits a query to the search engine, than selects or save a search results. The Knowledge Engine use this information to relate the user and the object more strictly, thus evolving the knowledge base to the new state.

The sum of all these evolutions creates the Profile Hyperspace, where users and objects tend to converge or diverge according to the correlation between them given by user activity.

As seen in the conceptual spaces definition, users can be profiled according to their preferences in terms of keywords, objects or geographical positions. This profiling gives the Net Wizard the capability of returning personalized results to user search requests, or to provide tailored information and services according to their preferences.

**Data model**

Database interface

The Knowledge Learner uses OLE DB to read and write SQL Server 2000 database.

ADO is a high level view of the OLE DB consumer protocol. In C/C++ we can use OLE DB directly. For performance convenience the connections to SQL Server are maintained open, on a one-per-thread basis. The cursor library is opened with *adUseServer* option, and lock is set to *adLockOptimistic.*

Data model

Examples of hyper-objects are links, users, keywords or set of keywords, html code, pictures and every part of a web page that can be selected and saved on the Personal Tree.

The hyper-object data structure is the following:

| Field Name | Type | Null | Size | Description |
|---|---|---|---|---|
| ObjectID | int | No | 4 bytes | Unique Object identifier |
| ObjectWeight | int | No | 4 bytes | |
| ObjectDecay | int | No | 4 bytes | |
| ObjectLoc[1..16] | real | | 4bytes*16 | HyperSpace cords (16 coord) |

Each record is 56 bytes long and the meaning of each field is the following:

| | |
|---|---|
| *ObjectID* | The *ObjectID* is the unique identificator of a hyper-object and it is assigned when the object is first saved or used into the system. |
| *Object Weight* | The *ObjectWeight* is used to determine the inertial mass of the object, that is defined as its resistance to movement in the Profile Hyperspace. The more the object is moved by the learning process, the more it becomes heavier, thus increasing its resistance to movement. In this way, objects tends to find their equilibrium point and to become more stable. |
| ObjectDecay | The ObjectDecay defined as its relevance compared to its last usage date. This parameter is used to filter the object loaded in the Knowledge Engine cache, thus determining the list of the 'live' objects. Every time the object is used or referenced, its ObjectDecay increases, in parallel with the ObjectWeight. Periodically, all the ObjectDecay values are reduced, so that only fresh objects are retrieved from the system. New objects can receive an ObjectDecay 'bonus', so that they are more likely listed in search results. |
| *ObjectLoc* | *ObjectLoc* is a vector of Integer containing the actual coordinates of the hyper-object in the hyperspace. |

Table KE USERS

This table represent a user in the hyperspace

| Field | Type | Length | Description |
|---|---|---|---|
| ID | int | 4 bytes | The unique userid |
| WEIGHT | int | 4 bytes | The actual weight in the hyperspace |
| DECAY | int | 4 bytes | The actual decay in the hyperspace |
| COORDS1..16 | real | 4 bytes*16 | The 16th dimension hyperspace coordinates |
| LASTUPD | datetime | 8 bytes | Last update date/time (trigger managed) |

A trigger TRG_UPDATEDATETTMESTAMP_KE_USERS is fired each insert/update to write LASTUPD field

Table KE KWDS

This table represent a keyword in the hyperspace

| Field | Type | Length | Description |
|---|---|---|---|
| ID | int | 4bytes | The unique keyword ID |
| WEIGHT | int | 4bytes | The actual weight in the hyperspace |
| DECAY | int | 4bytes | The actual decay in the hyperspace |
| COORDS1..16 | real | 4bytes*16 | The 16$^{th}$ dimension hyperspace coordinates |
| LASTUPD | datetime | 8bytes | Last update date/time (trigger managed) |

A trigger TRG_UPDATEDATETIMESTAMP_KE_KWDS is fired each insert/update to write LASTUPD field

Table KE IP

This table represent an IP address in the hyperspace

| Field | Type | Length | Description |
|---|---|---|---|
| ID | int | 4 bytes | The unique IP ID |
| WEIGHT | int | 4 bytes | The actual weight in the hyperspace |
| DECAY | int | 4 bytes | The actual decay in the hyperspace |
| COORDS1..16 | real | 4 bytes*16 | The 16$^{th}$ dimension hyperspace coordinates |
| LASTUPD | datetime | 8 bytes | Last update date/time (trigger managed) |

A trigger TRG_UPDATEDATETIMESTAMP_KE_IP is fired each insert/update to write LASTUPD field

Table KE OBJKWD-KE OBJUSR-KE OBJIP

This table represent a relation obj/user, obj/kwd, obj/ip in the hyperspace.
The three tables have the same internal structure as follow

| Field | Type | Length | Description |
|---|---|---|---|
| ID | int | 4bytes | The unique Object ID |
| WEIGHT | int | 4bytes | The actual weight in the hyperspace |
| DECAY | int | 4bytes | The actual decay in the hyperspace |
| COORDS1..16 | real | 4bytes*16 | The 16$^{th}$ dimension hyperspace coordinates |
| LASTUPD | datetime | 8 bytes | Last update date/time (trigger managed) |

A trigger TRG_UPDATEDATETIMESTAMP_KE_OBJ [IP, KWD, USER ] is fired each insert/update to write LASTUPD field, where x may be OKWD, OUSR, OIP

Table KE ACTIVITYLOG

This table is used to inform Knowledge processor (KProcessor in Fig.9) of a new status for keywords or objects (see Knowledge Processor documentation)

| Field | Type | Length | Description |
|---|---|---|---|
| GID | int | 4 bytes | The unique ID (Object or keyword) |

Table continued

| Field | Type | Length | Description |
|---|---|---|---|
| HITCOUNT | Int | 4 bytes | The number or times it has been updated |
| LASTWEIGHT | int | 4 bytes | The actual weight of the object |
| TYPE | Int | 4 bytes | The type of record; 1 = OBJ ID, 2 = KWD ID. |
| LASTUPD | datetime | 8 bytes | Last update date/time (trigger managed) |

A trigger TRG_UPDATEDATETIMESTAMP_KE_ACTIVITYLOG is fired to update the LASTUPD field when records are inserted or updated.

KX TR DATEUPD trigger

This is a simple trigger fired by the insert or update event on the relative table. It resides in the same table space as the tables.

In a preferred embodiment it is then described a system to access and organise information available from a network including one or more network servers and one or more network user units, the user units being provided with means allowing users to browse documents and access other services available form the network, wherein it comprises:

- means to associate a specific user to an identification key;
- means to track any action performed by an user through said browsing means and to associate the action related information to said identification key;
- means to allow an user to retrieve at least part of the effects of an action previously performed using the same identifying key;
- organising means capable of statistically analysing the frequency and the sequence of the actions performed by an user identified by the same identification key in order to suggest new action to the same user.

Preferably, said browsing means comprise computer means allowing a user to access keyword search engines over different knowledge databases of the network and to display their responses.

Preferably, said accessing and displaying means comprise computer means allowing a user to organise said responses.

Preferably, said accessing and displaying means comprise computer means capable of displaying hypertext responses with their hyperlinks inactivated and means allowing an user to activate hyperlinks on selected responses.

Preferably, said organising means comprise computer means allowing an user to delete selected responses from a screen.

Preferably, said organising means comprise computer means allowing an user to move selected parts of responses, in terms of text, images or hyperlinks, to a selected node of a keyword tree, being able to add new nodes when required.

Preferably, said organising means include a self-learning neural network system capable of being operated by a network server.

Preferably, said neural network system is capable of analysing the network available information and the actions of a user in the form of hyperobjects represented by hyperpoints of a number of hyperspaces, the relevance of said hyperobjects in respect to a user information search being classified according to their reciprocal distance in at least one of said hyperspaces.

Within the present invention it is further described a method to access and organise information available from a network including one or more network servers and one or more user units, the user units being provided with means allowing users to browse documents and access other services available form the network, characterised in that it comprise the following steps:

- identifying groups of users having a similar behaviour when they are browsing the network;
- statistically analysing the frequency of actions performed by the users of said groups in order to organise the information resulting form the network browsing;
- suggesting new action to said users on the base of the performed statistical analysis.

Preferably, said suggesting step is applied to users having a similar behaviour when they move selected parts of responses, in terms of text, images or hyperlinks, to a selected node of a keyword tree, they adding new nodes when required.

**Claims**

**1.** Method to access and organise information available from a network, said network including one or more network servers and one or more user units, each of said user units being provided with means allowing users to browse documents and access other services available from said network, said method comprising a steps of identifying groups of users having a similar behaviour when they are browsing the network;
said method being **characterized by** comprising the following steps performed at the server level:

- statistically analysing the frequency of access to keywords and/or hyperobjects by the users of said groups by means of a self-learning neural network-based system, in order to organise the information resulting from the network browsing, by means of computing correlation factors between users, keywords and hyperobjects;
- suggesting new actions to the users of said groups on the basis of the performed statistical analysis.

**2.** Method according to claim 1, **characterized in that** said step of computing correlation factors between users, keywords and hyperobjects comprises:

- analysing said information resulting from the network browsing and said keywords and hyperobjects represented by hyperpoints of a number of hyperspaces;
- positioning said hyperpoints randomly in said hyperspaces at the first time they are accessed;
- moving said hyperpoints along the hyperspaces each time a user accesses the corresponding hyperobject;
- measuring said correlation factors according to the reciprocal distance of said hyperpoints in at least one of said hyperspaces.

**3.** Method according to claim 2, **characterized in that** it comprises the following steps:

- generating a random vector corresponding to the coordinates $(x_m, x_n)$ of a random hyperpoint lying on a hypersphere, and associating said random vector to an hyperobject, if said hyperobject is not associated yet to a coordinate vector;
- processing said random vector $(x_m, x_n)$ with said self-learning neural network-based system to determine a change in position in hyperspace where the inputs of said self-learning system comprise said random vector $(x_m, x_n)$.

**4.** Method according to claim 3, **characterized in that** said reciprocal distance between a first hyperpoint $(x_n)$ associated to a first hyperobject and a second hyperpoint $(x_m)$ associated to a second hyperobject is adjusted following at least some of user's actions with the following steps:

- assigning to a variable (r) a positive or respectively negative value following said user's action, depending on whether the association between the involved elements has to become stronger or respectively weaker;
- calculating the new vectors $w_m$ and $w_n$ with the rules

$$w_m = w_m + r$$

$$w_n = w_n + r$$

- calculating the new coordinates of said first $(x_n)$ and second hyperpoint $(x_m)$ with the rules

$$x_m = (x_n \cdot r + x_m \cdot w_m)/(r + w_m)$$

$$x_n = (x_m \cdot r + x_n \cdot w_n)/(r + w_n)$$

**5.** System to access and organise information available from a network, said network comprising one or more network servers and one or more user units, each of said user units being provided with means allowing users to browse documents and access other services available from said network, said system comprising means for identifying groups of users having a similar behaviour when they are browsing the network, said system being **characterized in that** it comprises at the server level:

- means for statistically analysing the frequency of access to keywords and/or hyperobjects by the users of said groups by means of a self-learning neural network-based system
- means for organising the information resulting from the network browsing, by means of computing correlation factors between users, keywords and hyperobjects;
- means for suggesting new actions to the users of said groups on the basis of the performed statistical analysis.

**6.** System according to claim 5, **characterized in that** said means for computing correlation factors between users, keywords and hyperobjects comprises:

- means for analysing said information resulting from the network browsing and said keywords and hyperobjects represented by hyperpoints of a number of hyperspaces;
- means for positioning said hyperpoints randomly in said hyperspaces at the first time they are accessed;
- means for moving said hyperpoints along the hyperspaces each time a user accesses the corresponding hyperobject;
- means for measuring said correlation factors according to the reciprocal distance of said hyperpoints in at least one of said hyperspaces.

**7.** System according to claim 6, **characterized in that** said organising the information resulting from the network browsing, by means of computing correlation factors between users, keywords and hyperobjects, is performed by means of a self-learning neural network-based system.

**8.** System according to claim 7, **characterized in that** it comprises:

- means for generating a random vector corresponding to the coordinates $(x_m, x_n)$ of a random hyperpoint lying on a hypersphere, and associating said random vector to an hyperobject, if said hyperobject is not associated yet to a coordinate vector;
- means for processing said random vector $(x_m, x_n)$ with said self-learning neural network-based system to determine a change in position in hyperspace, where the inputs of said self-learning neural network-based system comprise said random vector $(x_m, x_n)$.

**9.** System according to claim 8, **characterized in that** said reciprocal distance between a first hyperpoint $(x_n)$ associated to a first hyperobject and a second hyperpoint $(x_m)$ associated to a second hyperobject is adjusted following at least some of user's actions with the following means:

- means for assigning to a variable (r) a positive or respectively negative value following said user's action, depending on whether the association between the involved elements has to become stronger or respectively weaker,
- means for calculating the new vectors $w_m$ and $w_n$ with the rules

$$w_m = w_m + r$$

$$w_n = w_n + r$$

- means for calculating the new coordinates of said first $(x_n)$ and second hyperpoint $(x_m)$ with the rules

$$x_m = (x_n \cdot r + x_m \cdot w_m)/(r + w_m)$$

$$x_n = (x_m \cdot r + x_n \cdot w_n)/(r + w_n)$$

**10.** Computer program comprising computer program code means adapted to perform all the steps of claims 1 to 4 when said program is run on a computer.

**11.** Computer readable medium having a program recorded thereon, said computer readable medium comprising computer program code means adapted to perform all the steps of claims 1 to 4 when said program is run on a computer.

**Patentansprüche**

**1.** Verfahren, um auf Information zuzugreifen und sie zu organisieren, die von einem Netz verfügbar ist, das Netz enthaltend einen oder mehr Netzserver und eine oder mehr Benutzereinheiten, wobei jede der Benutzereinheiten mit Mitteln versehen ist, die Benutzern erlauben, Dokumente zu durchsuchen (browsen) und auf andere Dienste zuzugreifen, die von dem Netz verfügbar sind, das Verfahren umfassend Schritte zum Identifizieren von Gruppen von Benutzern mit einem ähnlichen Verhalten, wenn sie das Netz durchsuchen;
wobei das Verfahren **gekennzeichnet** ist, die folgenden Schritte zu umfassen, die auf der Serverebene durchgeführt werden:

- statistisches Analysieren der Häufigkeit von Zugriff auf Schlüsselworte und/oder Hyperobjekte durch die Benutzer der Gruppen mittels eines selbst-lernenden neuronalen netz-basierten Systems, um die Information zu organisieren, die aus dem Durchsuchen des Netzes resultiert, mittels Berechnen von Korrelationsfaktoren zwischen Benutzern, Schlüsselworten und Hyperobjekten;
- Empfehlen neuer Aktionen für die Benutzer der Gruppen auf der Basis der durchgeführten statistischen Analyse.

**2.** Verfahren nach Anspruch 1, **gekennzeichnet dadurch, dass** der Schritt zum Berechnen von Korrelationsfaktoren zwischen Benutzern, Schlüsselworten und Hyperobjekten umfasst:

- Analysieren der Information, die aus dem Durchsuchen des Netzes resultiert, und der Schlüsselworte und Hyperobjekte, die durch Hyperpunkte einer Zahl von Hyperräumen dargestellt werden;
- Positionieren der Hyperpunkte zufällig in den Hyperräumen in dem ersten Mal, wenn auf sie zugegriffen wird;
- Bewegen der Hyperpunkte entlang der Hyperräume jedes Mal, wenn ein Benutzer auf das entsprechende Hyperobjekt zugreift;
- Messen der Korrelationsfaktoren gemäß dem reziproken Abstand der Hyperpunkte in mindestens einem der Hyperräume.

**3.** Verfahren nach Anspruch 2, **gekennzeichnet dadurch, dass** es die folgenden Schritte umfasst:

- Generieren eines zufälligen Vektors entsprechend den Koordinaten $(x_m, x_n)$ eines zufälligen Hyperpunktes, der auf einer Hypersphäre liegt, und Assoziieren des zufälligen Vektors mit einem Hyperobjekt, falls das Hyperobjekt noch nicht mit einem Koordinatenvektor assoziiert ist;
- Verarbeiten des zufälligen Vektors $(x_m, x_n)$ mit dem selbst-lernenden neuronalen netz-basierten System, um eine Änderung in einer Position im Hyperraum zu bestimmen, wobei die Eingaben des selbst-lernenden Systems den zufälligen Vektor $(x_m, x_n)$ umfassen.

**4.** Verfahren nach Anspruch 3, **gekennzeichnet dadurch, dass** der reziproke Abstand zwischen einem ersten Hyperpunkt $(x_n)$, der mit einem ersten Hyperobjekt assoziiert ist, und einem zweiten Hyperpunkt $(x_m)$, der mit einem zweiten Hyperobjekt assoziiert ist, folgend mindestens einigen von Aktionen eines Benutzers mit den folgenden Schritten abgestimmt wird:

- Zuweisen zu einer Variable $(r)$ eines positiven oder jeweils negativen Wertes folgend der Aktion des Benutzers, abhängig davon, ob die Assoziation zwischen den involvierten Elementen stärker oder jeweils schwächer zu werden hat;
- Kalkulieren der neuen Vektoren $w_m$ und $w_n$ mit den Regeln

$$w_m = w_m + r$$

$$w_n = w_n + r$$

- Kalkulieren der neuen Koordinaten des ersten ($x_n$) und zweiten Hyperpunktes ($x_m$) mit den Regeln

$$x_m = (x_n \cdot r + x_m \cdot w_m)/(r + w_m)$$

$$x_n = (x_m \cdot r + x_n \cdot w_n)/(r + w_n).$$

**5.** System, um auf Information zuzugreifen und sie zu organisieren, die von einem Netz verfügbar ist, das Netz umfassend einen oder mehr Netzserver und eine oder mehr Benutzereinheiten, wobei jede der Benutzereinheiten mit Mitteln versehen ist, die Benutzern erlauben, Dokumente zu durchsuchen und auf andere Dienste zuzugreifen, die von dem Netz verfügbar sind, das System umfassend Mittel zum Identifizieren von Gruppen von Benutzern mit einem ähnlichen Verhalten, wenn sie das Netz durchsuchen,
wobei das System **dadurch gekennzeichnet ist, dass** es auf der Serverebene umfasst:

- Mittel zum statistischen Analysieren der Häufigkeit von Zugriff auf Schlüsselworte und/oder Hyperobjekte durch die Benutzer der Gruppen mittels eines selbst-lernenden neuronalen netz-basierten Systems;
- Mittel zum Organisieren der Information, die aus dem Durchsuchen des Netzes resultiert, mittels Berechnen von Korrelationsfaktoren zwischen Benutzern, Schlüsselworten und Hyperobjekten;
- Mittel zum Empfehlen neuer Aktionen für die Benutzer der Gruppen auf der Basis der durchgeführten statistischen Analyse.

**6.** System nach Anspruch 5, **gekennzeichnet dadurch, dass** das Mittel zum Berechnen von Korrelationsfaktoren zwischen Benutzern, Schlüsselworten und Hyperobjekten umfasst:

- Mittel zum Analysieren der Information, die aus dem Durchsuchen des Netzes resultiert, und der Schlüsselworte und Hyperobjekte, die durch Hyperpunkte einer Zahl von Hyperräumen dargestellt werden;
- Mittel zum Positionieren der Hyperpunkte zufällig in den Hyperräumen in dem ersten Mal, wenn auf sie zugegriffen wird;
- Mittel zum Bewegen der Hyperpunkte entlang der Hyperräume jedes Mal, wenn ein Benutzer auf das entsprechende Hyperobjekt zugreift;
- Mittel zum Messen der Korrelationsfaktoren gemäß dem reziproken Abstand der Hyperpunkte in mindestens einem der Hyperräume.

**7.** System nach Anspruch 6, **gekennzeichnet dadurch, dass** das Organisieren der Information, die aus dem Durchsuchen des Netzes resultiert, mittels Berechnen von Korrelationsfaktoren zwischen Benutzern, Schlüsselworten und Hyperobjekten, mittels eines selbst-lernenden neuronalen netz-basierten Systems durchgeführt wird.

**8.** System nach Anspruch 7, **gekennzeichnet dadurch, dass** es umfasst:

- Mittel zum Generieren eines zufälligen Vektors entsprechend den Koordinaten ($x_m$, $x_n$) eines zufälligen Hyperpunktes, der auf einer Hypersphäre liegt, und Assoziieren des zufälligen Vektors mit einem Hyperobjekt, falls das Hyperobjekt noch nicht mit einem Koordinatenvektor assoziiert ist;
- Mittel zum Verarbeiten des zufälligen Vektors ($x_m$, $x_n$) mit dem selbst-lernenden neuronalen netz-basierten System, um eine Änderung in einer Position im Hyperraum zu bestimmen, wobei die Eingaben des selbst-lernenden neuronalen netz-basierten Systems den zufälligen Vektor ($x_m$, $x_n$) umfassen.

**9.** System nach Anspruch 8, **gekennzeichnet dadurch, dass** der reziproke Abstand zwischen einem ersten Hyper-

punkt ($x_n$), der mit einem ersten Hyperobjekt assoziiert ist, und einem zweiten Hyperpunkt ($x_m$), der mit einem zweiten Hyperobjekt assoziiert ist, folgend mindestens einigen Aktionen eines Benutzers mit den folgenden Mitteln abgestimmt wird:

- Mittel zum Zuweisen zu einer Variable ($r$) eines positiven oder jeweils negativen Wertes folgend der Aktion des Benutzers, abhängig davon, ob die Assoziation zwischen den involvierten Elementen stärker oder jeweils schwächer zu werden hat;
- Mittel zum Kalkulieren der neuen Vektoren $w_m$ und $w_n$ mit den Regeln

$$w_m \ = \ w_m \ + \ r$$

$$w_n \ = \ w_n \ + \ r$$

- Mittel zum Kalkulieren der neuen Koordinaten des ersten ($x_n$) und zweiten Hyperpunktes ($x_m$) mit den Regeln

$$x_m \ = \ (x_n \cdot r \ + \ x_m \cdot w_m)/(r \ + \ w_m)$$

$$x_n \ = \ (x_m \cdot r \ + \ x_n \cdot w_n)/(r \ + \ w_n).$$

**10.** Computerprogramm, umfassend Computerprogrammcodemittel, angepasst, alle Schritte von Anspruch 1 bis 4 durchzuführen, wenn das Programm auf einem Computer läuft.

**11.** Computerlesbares Medium mit einem Programm, das darin aufgezeichnet ist, das computerlesbare Medium umfassend Computerprogrammcodemittel, angepasst, alle Schritte von Anspruch 1 bis 4 durchzuführen, wenn das Programm auf einem Computer läuft.


**Revendications**

**1.** Procédé destiné à accéder et organiser des informations disponibles depuis un réseau, ledit réseau comportant un ou plusieurs serveurs de réseau et une ou plusieurs unités d'utilisateur, chacune desdites unités d'utilisateur étant pourvue d'un moyen autorisant des utilisateurs à explorer des documents et accéder à d'autres services disponibles depuis ledit réseau, ledit procédé comprenant une étape consistant à identifier des groupes d'utilisateurs ayant un comportement similaire lorsqu'ils explorent le réseau ;
ledit procédé étant **caractérisé en ce qu'**il comprend les étapes suivantes réalisées au niveau du serveur :

- analyser de manière statistique la fréquence d'accès à des mots-clés et/ou des hyperobjets par les utilisateurs desdits groupes au moyen d'un système d'auto-apprentissage à base de réseau neuronal afin d'organiser les informations résultant de l'exploration du réseau, au moyen d'un calcul de facteurs de corrélation entre des utilisateurs, des mots-clés et des hyperobjets ;
- suggérer de nouvelles actions aux utilisateurs desdits groupes sur la base de l'analyse statistique réalisée.

**2.** Procédé selon la revendication 1, **caractérisé en ce que** ladite étape consistant à calculer des facteurs de corrélation entre des utilisateurs, des mots-clés et des hyperobjets comprend les étapes suivantes :

- analyser lesdites informations résultant de l'exploration du réseau et lesdits mots-clés et hyperobjets représentés par des hyperpoints d'un certain nombre d'hyperespaces ;
- positionner lesdits hyperpoints de manière aléatoire dans lesdits hyperespaces la première fois que l'on y accède ;
- déplacer lesdits hyperpoints le long des hyperespaces chaque fois qu'un utilisateur accède à l'hyperobjet correspondant :
- mesurer lesdits facteurs de corrélation selon la distance réciproque desdits hyperpoints dans au moins un parmi lesdits hyperespaces.

3. Procédé selon la revendication 2, **caractérisé en ce qu'**il comprend les étapes suivantes :

- générer un vecteur aléatoire correspondant aux coordonnées ($x_m$, $x_n$) d'un hyperpoint aléatoire se trouvant sur une hypersphère, et associer ledit vecteur aléatoire à un hyperobjet, si ledit hyperobjet n'est pas encore associé à un vecteur de coordonnées ;
- traiter ledit vecteur aléatoire ($x_m$, $x_n$) avec ledit système d'auto-apprentissage à base de réseau neuronal afin de déterminer un changement de position dans un hyperespace, dans lequel les entrées dudit système d'auto-apprentissage comprennent ledit vecteur aléatoire ($x_m$, $x_n$).

4. Procédé selon la revendication 3, **caractérisé en ce que** ladite distance réciproque entre un premier hyperpoint ($x_n$) associé à un premier objet et un second hyperpoint ($x_m$) associé à un second hyperobjet est ajustée à la suite d'au moins quelques unes parmi les actions de l'utilisateur grâce aux étapes suivantes :

- assigner à une variable (r) une valeur respectivement positive ou négative à la suite de ladite action de l'utilisateur, en fonction de la condition selon laquelle l'association entre les organes impliqués doit devenir plus forte ou plus faible respectivement ;
- calculer les nouveaux vecteurs $w_m$ et $w_n$ grâce aux règles

$$w_m = w_m + r$$

$$w_n = w_n + r$$

- calculer les nouvelles coordonnées desdits premier ($x_n$) et second ($x_m$) hyperpoints grâce aux règles

$$x_m = (x_n \cdot r + x_m \cdot w_m) / (r + w_m)$$

$$x_n = (x_m \cdot r + x_n \cdot w_n) / (r + w_n)$$

5. Système destiné à accéder et organiser des informations disponibles depuis un réseau, ledit réseau comprenant un ou plusieurs serveurs de réseau et une ou plusieurs unités d'utilisateur, chacune desdites unités d'utilisateur étant pourvue d'un moyen autorisant des utilisateurs à explorer des documents et accéder à d'autres services disponibles depuis ledit réseau, ledit système comprenant un moyen destiné à identifier des groupes d'utilisateurs ayant un comportement similaire lorsqu'ils explorent les réseau,
ledit système étant **caractérisé en ce qu'**il comprend, au niveau du serveur :

- un moyen destiné à analyser de manière statistique la fréquence d'accès à des mots-clés et/ou des hyperobjets par les utilisateurs desdits groupes au moyen d'un système d'auto-apprentissage à base de réseau neuronal,
- un moyen destiné à organiser les informations résultant de l'exploration du réseau, au moyen d'un calcul de facteurs de corrélation entre des utilisateurs, des mots-clés et des hyperobjets ;
- un moyen destiné à suggérer de nouvelles actions aux utilisateurs desdits groupes sur la base de l'analyse statistique réalisée.

6. Système selon la revendication 5, **caractérisé en ce que** ledit moyen destiné à calculer des facteurs de corrélation entre des utilisateurs, des mots-clés et des hyperobjets comprend :

- un moyen destiné à analyser lesdites informations résultant de l'exploration du réseau et lesdits mots-clés et hyperobjets représentés par des hyperpoints d'un certain nombre d'hyperespaces ;
- un moyen destiné à positionner lesdits hyperpoints de manière aléatoire dans ledit hyperespace la première fois que l'on y accède ;
- un moyen destiné à déplacer lesdits hyperpoints le long des hyperespaces chaque fois qu'un utilisateur accède à l'hyperobjet correspondant ;

- un moyen destiné à mesurer lesdits facteurs de corrélation selon la distance réciproque desdits hyperpoints dans au moins un parmi lesdits hyperespaces.

7. Système selon la revendication 6, **caractérisé en ce que** ladite organisation des informations résultant de l'exploration du réseau, au moyen d'un calcul de facteurs de corrélation entre des utilisateurs, des mots-clés et des hyperobjets, est réalisée au moyen d'un système d'auto-apprentissage à base de réseau neuronal.

8. Système selon la revendication 7, **caractérisé en ce qu'**il comprend :

   - un moyen destiné à générer un vecteur aléatoire correspondant aux coordonnées ($x_m$, $x_n$) d'un hyperpoint aléatoire se trouvant sur une hypersphère et associer ledit vecteur aléatoire à un hyperobjet, si ledit hyperobjet n'est pas encore associé à un vecteur de coordonnées :
   - un moyen destiné à traiter ledit vecteur aléatoire ($x_m$, $x_n$) avec ledit système d'auto-apprentissage à base de réseau neuronal afin de déterminer un changement de position dans un hyperespace, dans lequel les entrées dudit système neuronal d'auto-apprentissage sur la base d'un réseau comprennent ledit vecteur aléatoire ($x_m$, $x_n$).

9. Système selon la revendication 8, **caractérisé en ce que** ladite distance réciproque entre un premier hyperpoint ($x_n$) associé à un premier hyperobjet et un second hyperpoint ($x_m$) associé à un second hyperobjet est ajustée à la suite d'au moins quelques unes parmi des actions de l'utilisateur à l'aide de moyens suivants :

   - un moyen destiné à assigner à une variable (r), une valeur respectivement positive ou négative à la suite de ladite action de l'utilisateur, en fonction de la condition selon laquelle l'association entre les éléments impliqués doit devenir plus forte ou plus faible respectivement ;
   - un moyen destiné à calculer les nouveaux vecteurs $w_m$ et $w_n$ grâce aux règles

$$w_m = w_m + r$$

$$w_n = w_n + r$$

   - un moyen destiné à calculer les nouvelles coordonnées desdits premier ($x_n$) et second ($x_m$) hyperpoints grâce aux règles

$$x_m = (x_n \cdot r + x_m \cdot w_m) / (r + w_m)$$

$$x_n = (x_m \cdot r + x_n \cdot w_n) / (r + w_n)$$

10. Programme informatique comprenant un moyen de code de programme informatique adapté pour réaliser toutes les étapes selon les revendications 1 à 4 lorsque ledit programme est exécuté sur un ordinateur.

11. Support lisible par un ordinateur sur lequel est enregistré un programme, ledit support lisible par un ordinateur comprenant un moyen de code de programme informatique adapté pour réaliser toutes les étapes selon les revendications 1 à 4 lorsque ledit programme est exécuté sur un ordinateur.

Fig. 1

Fig. 2

Fig. 3

*m*

*n*

**Fig. 4**

$w=1$

$w=1000$

**Fig. 5**

$$w = 1000 + r$$

**Fig. 6**

**<1**

**>1**

**<1**

**Fig. 7**

Fig. 8

FIG. 9

**Web Tier**
Win2000
IIS - WLBS

| Web Server₁ | Web Server₂ | Web Server₃ | Web Server₄ | ... | Web Serverₙ |
| ASP | ASP | ASP | ASP | | ASP |

DCOM

ADO

**Application Tier**

**Database Tier**

Queue Mgr — Queue Srv₁
Queue Mgr — Queue Srv₂

**Queue Mgr Cluster**

DCOM

MC₁ — MS₁ / MSₙ / Url
...
MCₙ — MS₁ / MSₙ / Url

**MConsumers**

Win2000 SE

ADO

SQL Server₁    SQL Server₂

**SQL Server Cluster**

SQL Server 2000

FibCh

DCOM        DCOM

**Wizard Tier**

ADO

KC₁ ... KC₁ₙ

**KConsumers**

KL₁ ... KL₁ₙ

**KLearners**

KP₁ ... KP₁ₙ

**KProcessors**

Win2000 SE

Storage Area
Network

Win2000 DCE

EP 1 323 065 B1

FIG. 10

Web Tier

2x1000MHz Pentium III – 1.15GB Ram - 2x9GB Raid 1 - 10/100 Mbps

Application Tier

2x700MHz Pentium III
Xeon
1.5GB Ram
2x9GB Raid 1
10/100 Mbps
*Queue Mgr Cluster*

2x1000MHz Pentium III
640MB Ram
2x9GB Raid 1
10/100 Mbps
*MConsumers*

DB Tier

2x700MHz Pentium III
Xeon
2.5GB Ram
2x9GB Raid 1
10/100 Mbps
*SQL Cluster*

Wizard Tier

2x1000MHz Pentium III
640MB Ram
2x9GB Raid 1
10/100 Mbps
*KConsumers*

2x1000MHz Pentium III
640MB Ram
2x9GB Raid 1
10/100 Mbps
*KLearners*

2x1000MHz Pentium III
1.6GB Ram
2x9GB Raid 1
10/100 Mbps
*KProcessors*

30x72GB Raid 1
100Mbps Fiber Channel bus
1Gbps LAN Connection

*Storage Area Network*

EP 1 323 065 B1